# EUROPEAN PATENT SPECIFICATION

(11) **EP 1 810 910 B1**
(45) Date of publication and mention of the grant of the patent: **31.03.2010**
(21) Application number: 07100273.7
(22) Date of filing: 09.01.2007
(51) Int. Cl.: B62D 5/04

(54) **Motor and power steering apparatus**
Motor und Servolenkungsvorrichtung
Moteur et appareil de direction assistée

(30) Priority: 19.01.2006 JP 2006011610
(43) Date of publication of application: 25.07.2007
(73) Proprietor: JTEKT Corporation, Osaka-shi Osaka 542-8502 (JP)
(72) Inventor: Tsuji, Yasuaki c/o JTEKT Corporation, Osaka 542-8502 (JP)
(74) Representative: Selting, Günther

(56) References cited:
- US-A- 6 118 568
- US-A- 6 157 112

## Description

### BACKGROUND OF THE INVENTION

### 1. Technical Field

The present invention relates to a power steering apparatus comprising a steering shaft, a torque sensor and a controller.

### 2. Background Art

Electric power steering apparatus has recently become very popular as a power steering apparatus for an automobile. The electric power steering apparatus drives a motor for steering assistance according to rotational operation of a steering member such as a steering wheel, and applies the rotation of the motor, via an appropriate reduction mechanism that reduces the rotation speed, to the steering mechanism thus to assist the steering operation, and can be classified into a column-assist type, rack-assist type and others depending on the mounting position of the motor. In the column-assist type the motor is mounted outside of a column housing that supports the steering shaft, and the motor is required to be as small as possible for securing larger foot space of the driver in the vehicle cabin. In the rack-assist type, the motor is mounted on a rack housing disposed in the engine room, and likewise the motor is required to be as small as possible, because of being located in a limited space in the engine room.

For reducing the dimensions of the motor, various proposals have been made regarding the arrangement of the motor and a rotation detector thereof, for example as Japanese Utility Model Application Laid-Open No. H05-023775. According to this document, a rotating member on which the rotation detector is to be mounted is attached to a rotating shaft of a rotor so as to overlap with a portion of the rotor radially of the rotating shaft, and a portion of the rotation detector is mounted on the rotating member. Such configuration allows saving a length corresponding to the space occupied with the rotation detector, thus reducing the axial length of the motor.

The motor according to the Japanese Utility Model Application Laid-Open No. H05-023775, however, merely saves the space corresponding to the space occupied with the rotation detector, and hence further reduction in axial length of the motor is desired.

Document US 6,118,568 A discloses a polygon mirror assembly including a polygon mirror driven by a motor supported on a supporting stand. The motor comprises a stator and a rotor supported by bearings. One of the bearings is positioned between the ends of the rotor in axial direction of the rotating shaft.

### BRIEF SUMMARY OF THE INVENTION

The present invention has been conceived in view of the foregoing situation, with an object to provide a power steering apparatus having a motor with a rearranged configuration of the bearing that supports the rotating shaft of the rotor so as to reduce the axial length thereof, thus satisfying the requirement for reduction in dimensions of the motor.

The power steering apparatus of the invention is defined by claim 1.

A preferred embodiment of the present invention provides that the rotor includes a disk-shaped portion disposed coaxially with the rotating shaft and a cylindrical portion extending parallel to the rotating shaft from a circumferential edge of the disk-shaped portion; and the bearing is located inside the cylindrical portion.

A preferred embodiment of the present invention provides a motor comprising a rotation detector partially or entirely disposed between the ends of the rotor in the axial direction of the rotating shaft, to thereby detect a rotational position of the rotor.

The above and further objects and features of the invention will more fully be apparent from the following detailed description with accompanying drawings.

### BRIEF DESCRIPTION OF THE SEVERAL VIEWS OF THE DRAWINGS

FIG. 1 is a cross-sectional view showing an outline of a structure of a motor according to a first embodiment of the present invention;
FIG. 2 is a schematic diagram showing a structure of an electric power steering apparatus including the motor according to the present invention; and
FIG. 3 is a cross-sectional view showing an outline of a structure of a motor according to a second embodiment of the present invention.

### DETAILED DESCRIPTION OF THE INVENTION

Hereunder, the present invention will be described based on the drawings illustrating the embodiments thereof.

### [First embodiment]

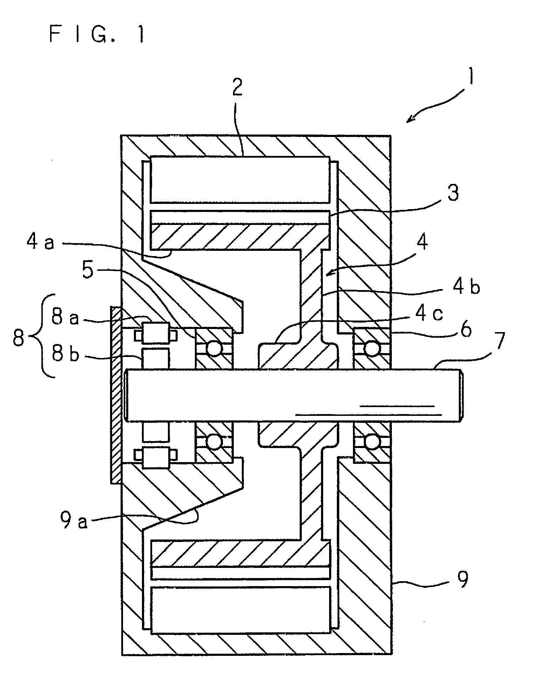

FIG. 1 is a cross-sectional view showing an outline of a structure of a motor according to a first embodiment of the present invention. As shown in FIG. 1, the motor 1 includes a stator 2 disposed inside a housing 9, a rotating shaft 7 rotatably supported by the housing 9 via bearings 5, 6, and a rotor 4 fixed to the rotating shaft 7.

The housing 9 is of a cylindrical shape including an end wall on the respective sides in an axial direction, and the stator 2 is fitted to an inner circumferential wall of the housing 9. The stator 2 includes a plurality of cores, circumferentially aligned on an inner circumferential surface of the stator 2 at regular intervals so as to oppose each other, and each core is coil-wound thus to constitute a magnetic pole. The housing 9 includes an opening on the respective end walls, and the bearings 5, 6 are respectively fitted inside the opening on the end wall.

The rotor 4 includes a disk-shaped portion 4b coaxially press-fitted over the rotating shaft 7 and a cylindrical portion 4a extending parallel to the rotating shaft 7 from a circumferential edge of the disk-shaped portion 4b, and hence the rotor 4 is of a cylindrical shape, with the disk-shaped portion 4b disposed so as to close one of end portions. The rotor 4 is provided with permanent magnets 3 fixed to an outer circumferential surface of the cylindrical portion 4a over the entire axial length thereof, such that the opposite polarities are alternately aligned.

The rotor 4 thus fixed to the rotating shaft 7 is, as shown in FIG. 1, disposed so as to oppose the stator 2 via a narrow gap, with the axial end portions of the rotor 4 and the stator 2 aligned, inside the housing 9 which supports the rotating shaft 7 via the bearings 5, 6 located on the respective sides of the rotor 4. The housing 9 includes a protrusion 9a projecting inwardly of the cylindrical portion 4a of the rotor 4, from one of the end walls. One of the bearings 5 is fitted inside the protrusion 9a of the end wall of the housing 9, so as to support a portion of the rotating shaft 7 at a position inner than an axial end portion of the cylindrical portion 4a of the rotor 4. The other bearing 6 is fitted to the other end wall of the housing 9, thus to support another portion of the rotating shaft 7.

In the motor 1 thus configured, a pair of opposing coils of the stator 2 constitutes a set that generates a magnetic field, so that sequentially switching a current supplied to the respective coils shifts the magnetic field in a rotating direction (i.e. generates a rotating magnetic field), to thereby provide a rotational force to the permanent magnet 3 via the rotating magnetic field, thus to rotate the rotor 4. Although the rotor 4 with the permanent magnet 3 has to have a certain axial length for attaining a predetermined electromotive force, setting a minimum necessary axial length of the rotor 4 leads to reduction in axial length of the motor 1.

On one of the sides of the bearing 5, a rotation detector 8 that detects a rotational position of the rotor 4 is provided, for controlling the motor 1. The rotation detector 8 shown in FIG. 1 includes a resolver stator 8a and a resolver rotor 8b each of which is coil-wound, and constitutes a known resolver that detects a rotational position based on a variation in electromagnetic coupling factor between the coils according to a rotational angle. The resolver stator 8a is fixed to the protrusion 9a of the housing 9, and the resolver rotor 8b to the rotating shaft 7, such that approximately a half of the rotation detector 8 is located inner than the axial end portion of the cylindrical portion 4a of the rotor 4. Here, the rotation detector 8 may be constituted of a different detector such as a magnetic encoder or an optical encoder, without limitation to the resolver.

Thus, in the motor 1 shown in FIG. 1, since the bearing 5 is located inside the cylindrical portion 4a of the rotor 4, the axial length of the motor 1 can be reduced by a length corresponding to the space occupied with the bearing 5. Here, a portion of the bearing 5 may be located inside the cylindrical portion 4a of the rotor 4. Further in the motor 1 shown in FIG. 1, since approximately a half of the rotation detector 8 is located inside the cylindrical portion 4a of the rotor 4, the axial length of the motor 1 can be further reduced. However, it is more preferable to reduce, for example, the axial dimension of the rotation detector 8, thereby accommodating the entire rotation detector 8 inside the cylindrical portion 4a of the rotor 4.

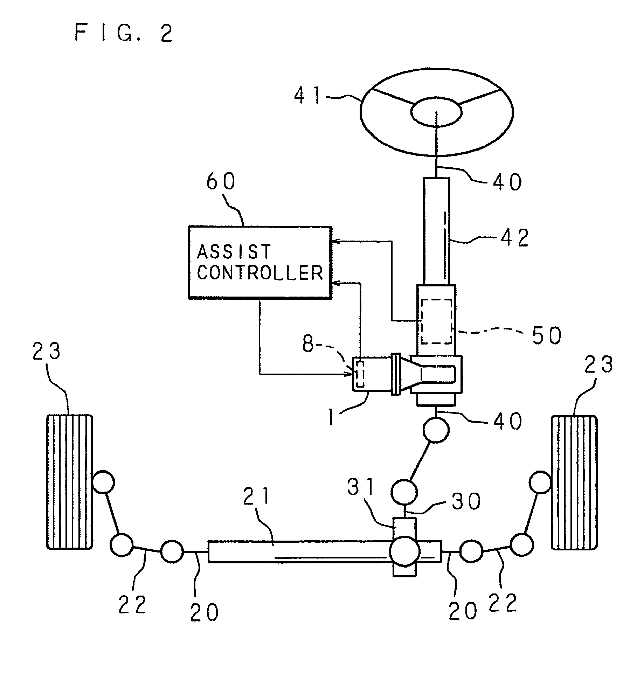

The foregoing motor 1 may be employed, for example, as a motor for steering assistance of an electric power steering apparatus. FIG. 2 is a schematic diagram showing a structure of an electric power steering apparatus including the motor according to the present invention. Here, the electric power steering apparatus depicted therein is of a column-assist type.

The electric power steering apparatus includes a known rack-and-pinion type steering mechanism having a rack shaft 20 axially movably supported inside a rack housing 21 disposed so as to extend in a left and right direction of a vehicle body (not shown), and a pinion shaft 30 rotatably supported inside a pinion housing 31 intersecting halfway of the rack housing 21. End portions of the rack shaft 20 outwardly projecting from end portions of the rack housing 21 are respectively connected to left and right front wheels serving as directional wheels, via a respective tie rod 22, 22. An upper end portion of the pinion shaft 30 outwardly projecting from a side of the pinion housing 31 is connected to a steering wheel 41, embodying the steering member, via a steering shaft 40.

Under such configuration, when the steering wheel 41 is rotationally operated for changing a direction, the rotation is transmitted to the pinion shaft 30 via the steering shaft 40, so that the rotation of the pinion shaft 30 is converted into an axial movement of the rack shaft 20, and that the left and right front wheels 23, 23 are thereby pushed or pulled via the respective tie rod 22, 22, and thus the steering operation is achieved.

Halfway of a column housing 42 supporting the steering shaft 40, a torque sensor 50 is provided so as to detect a steering torque applied to the steering shaft 40 by the rotational operation of the steering wheel 41, and the motor 1 according to the present invention is located at a position lower than the torque sensor 50.

The motor 1 is mounted outside the column housing 42 such that the respective axial centers are generally orthogonal to each other, so as to transmit the rotation of the motor 1 to the steering shaft 40 at a reduced speed, for example via a worm gear fixed to an output shaft extending into inside of the column housing 42 thread-engaged with a worm wheel fitted around the steering shaft 40. Such structure allows transmitting the rotation of the motor 1 to the steering shaft 40 at a reduced speed, thereby applying a rotational force to the pinion shaft 30 coupled to the lower end portion of the steering shaft 40 and thus achieving assistance for the steering operation as described above.

The motor 1 is driven according to a control command provided by the assist controller 60 via a motor driving circuit which is not shown. A steering torque value detected by the torque sensor 50 is input to the assist controller 60, so that the assist controller 60 outputs a control command to the motor 1 based on the input value, thereby increasing or decreasing a driving current for the motor 1 thus executing an assistance control. The motor 1 includes the rotation detector 8 configured as above, so that the rotational position of the rotor 4 output by the rotation detector 8 is input as a rotor position signal to the assist controller 60 and the motor driving circuit, thus to be utilized for controlling the sequential switching of the current to be supplied to the coil of the stator 2 of the motor 1,

The motor 1 may be mounted at a desired position of the steering shaft 40, the pinion shaft 30 or the rack shaft 20 to transmit the rotation, without limitation to the position shown in FIG. 2, as long as it is below the torque sensor 50 which detects the steering torque.

In the electric power steering apparatus thus configured, in the case of the column-assist type as shown in FIG. 1, reducing the dimensions of the motor 1 leads to decreased projection length of the motor 1 outside the column housing 42, thereby facilitating securing a larger foot space for the driver in the vehicle cabin. In contrast, in an electric power steering apparatus of a rack-assist type in which the motor 1 is mounted on the rack housing 21 so as to transmit the rotational force to the rack shaft 20, reducing the dimensions of the motor 1 allows increasing a space available in the engine room, thereby facilitating securing a space for providing a crushable zone that absorbs an impact energy in the event of collision, or for the motor 1 with an increased output power for a larger type vehicle.

### [Second embodiment]

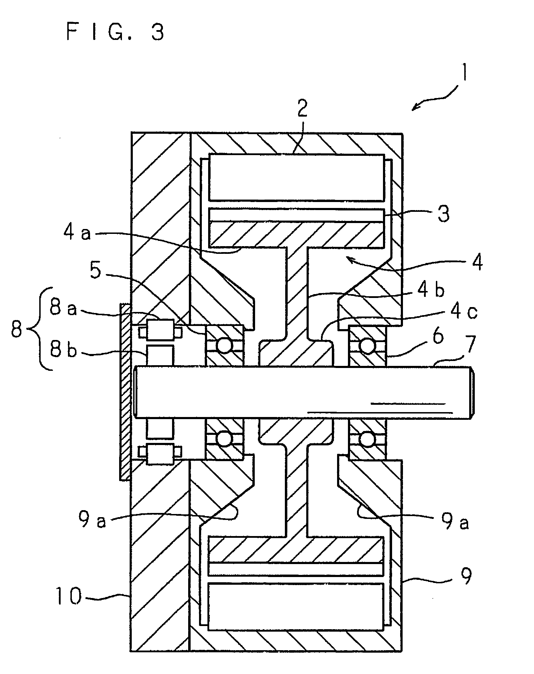

FIG. 3 is a cross-sectional view showing an outline of a structure of a motor according to a second embodiment of the present invention.

In the second embodiment, the rotor 4 includes the disk-shaped portion 4b coaxially press-fitted over the rotating shaft 7 and the cylindrical portion 4a extending parallel to the rotating shaft 7 from the circumferential edge of the disk-shaped portion 4b, and hence the rotor 4 is of a cylindrical shape, with the disk-shaped portion 4b disposed so as to close halfway of the cylinder. The rotor 4 is provided with permanent magnets 3 fixed to the outer circumferential surface of the cylindrical portion 4a over the entire axial length thereof, such that the opposite polarities are alternately aligned.

The rotor 4 thus fixed to the rotating shaft 7 is, as shown in FIG. 3, disposed so as to oppose the stator 2 via a narrow gap, with the axial end portions of the rotor 4 and the stator 2 aligned, inside the housing 9 which supports the rotating shaft 7 via the bearings 5, 6 located on the respective sides of the rotor 4. The housing 9 includes, as shown in FIG. 3, protrusions 9a, 9a projecting inwardly of the cylindrical portion 4a of the rotor 4, from the respective end walls. The bearings 5, 6 are respectively fitted inside the protrusions 9a, 9a of the housing 9, so as to support the rotating shaft 7 at the respective positions inner than the axial end portions of the cylindrical portion 4a,

On one of the sides of the bearing 5, the rotation detector 8 that detects a rotational position of the rotor 4 is provided, for controlling the motor 1. The resolver stator 8a is fixed to a housing 10, and the resolver rotor 8b to the rotating shaft 7, respectively.

Thus, in the motor 1 shown in FIG. 3, since the bearings 5, 6 are located inside the cylindrical portion 4a of the rotor 4, the axial length of the motor 1 can be reduced by a length corresponding to the space occupied with the bearings 5, 6.

The structure and operation of the remaining portion is similar to those of the first embodiment shown in FIG. 1, and hence the corresponding constituents are given the identical reference numerals, and detailed description of the structure and function thereof will not be repeated.

In addition, although the entirety of the bearings 5, 6 is located inside the cylindrical portion 4a of the rotor 4 according to the second embodiment, a portion of the bearings 5, 6 may be located inside the cylindrical portion 4a of the rotor 4.

## Claims

1. A power steering apparatus comprising:
a steering shaft (40) having an end to be connected to a steering member (41) and the other end to be connected to a steering mechanism (20, 21, 30, 31);
a torque sensor (50) that detects a steering torque exerted on the steering shaft (40);
a motor (1) having:
a stator (2) disposed in a housing (9);
a rotating shaft (7) rotatably supported by the housing (9) via one or more bearings (5, 6); and
a rotor (4) fixed to the rotating shaft (7) and provided with a magnet (3) fixed to an outer circumferential surface thereof over an entire length thereof in an axial direction of the rotating shaft (7), the motor providing an assisting rotational force to the steering shaft (40) in accordance with the steering torque detected by the torque sensor (50); and
a controller (60) for accepting the steering torque detected by the torque sensor (50), and driving the motor (1) based on the accepted steering torque, wherein
a part or an entirety of at least one of the bearings (5, 6) is located between ends of the rotor (4) in an axial direction of the rotating shaft (7).

2. The power steering apparatus according to claim 1, wherein the rotor (4) includes a disk-shaped portion (4b) disposed coaxially with the rotating shaft (7) and a cylindrical portion (4a) extending parallel to the rotating shaft (7) from a circumferential edge of the disk-shaped portion (4b); and the bearing (5, 6) is located radially inside the cylindrical portion (4a).

3. The power steering apparatus according to claim 1 or 2, further comprising a rotation detector (8) partially or entirely disposed between axial end portions of the rotor (4), to thereby detect a rotational position of the rotor (4).

## Patentansprüche

1. Servolenkvorrichtung mit:
einer Lenkwelle (40), deren eines Ende mit einem Lenkteil (41) verbunden ist und deren anderes Ende mit einem Lenkmechanismus (20, 21, 30, 31) verbunden ist;
einem Drehmomentsensor (50), der ein auf die Lenkwelle (40) aufgebrachtes Lenkdrehmoment erkennt;
einem Motor (1) mit:
einem in einem Gehäuse (9) angeordneten Stator (2);
einer Drehwelle (7), die über ein oder mehrere Lager (5, 6) drehbar durch das Gehäuse (9) gestützt ist; und
einem Rotor (4), der an der Drehwelle (7) befestigt und mit einem Magneten (3) versehen ist, welcher in axialer Richtung der Drehwelle (7) über die gesamte Länge des Rotors an dessen Außenumfang angebracht ist, wobei der Motor entsprechend dem von dem Drehmomentsensor (50) erkannten Drehmoment eine unterstützende Drehkraft auf die Lenkwelle (40) aufbringt; und
einer Steuerung (60) zum Empfangen des von dem Drehmomentsensor (50) erkannten Drehmoments und zum Treiben des Motors (1) auf der Basis des empfangenen Lenkdrehmoments, wobei
ein Teil oder die Gesamtheit mindestens eines der Lager (5, 6) in axialer Richtung der Drehwelle (7) zwischen den Enden des Rotors (4) angeordnet ist.

2. Servolenkvorrichtung nach Anspruch 1, bei welcher der Rotor (4) einen scheibenförmigen Bereich (4b), der koaxial mit der Drehwelle (7) angeordnet ist, und einen zylindrischen Bereich (4a) aufweist, der sich von einem Umfangsrand des scheibenförmigen Bereichs (4b) parallel zu der Drehwelle (7) erstreckt; und wobei das Lager (5, 6) radial innerhalb des zylindrischen Bereichs (4a) angeordnet ist.

3. Servolenkvorrichtung nach Anspruch 1 oder 2, ferner mit einem Rotationsdetektor (8), der teilweise oder vollständig zwischen axialen Endbereichen des Rotors (4) angeordnet ist, um so eine Drehposition des Rotors (4) zu erkennen.

## Revendications

1. Appareil de direction assistée comprenant:
un arbre de direction (40) dont l'une des extrémités est connectée à un élément de direction (41) et l'autre des extrémités est connectée à un mécanisme de direction (20, 21, 30, 31);
un capteur de torque (50) détectant un torque de direction appliqué sur l'arbre de direction (40);
un moteur (1) comprenant:
un stator (2) disposé dans un boitier (9);
un arbre rotatif (7) supporté en rotation dans le boitier (9) par un ou plusieurs paliers (5, 6); et
un rotor (4) fixé sur l'arbre rotatif (7) et muni d'un aimant (3) fixé à la surface périphérique extérieure de celui-ci selon toute sa longueur dans la direction axiale de l'arbre rotatif (7), ledit moteur fournissant une force de rotation assistante à l'arbre de direction (40) correspondant au torque de direction détecté par ledit capteur de torque (50); et
une commande (60) pour recevoir le torque de direction détecté par le capteur de torque (50) et pour entrainer le moteur (1) sur la base du torque de direction reçu,
une partie ou la totalité d'au moins un des paliers (5, 6) étant située entres les extrémités du rotor (4) dans la direction axiale de l'arbre rotatif (7).

2. Appareil de direction assistée selon la revendication 1, dans lequel le rotor (4) comprend une partie en forme de disque (4b), située coaxialement par rapport à l'arbre rotatif (7), et une partie cylindrique (4a) s'étendant en parallèle à l'arbre rotatif (7) depuis un bord périphérique de la partie en forme de disque (4b); et le palier (5, 6) est situé radialement à l'intérieur de ladite partie cylindrique (4a).

3. Appareil de direction assistée selon la revendication 1 ou 2, en outre comprenant un détecteur de rotation (8) qui est partiellement ou complètement situé entre des parties d'extrémité axiales du rotor (4) afin de détecter une position de rotation dudit rotor (4).
